# EUROPEAN PATENT SPECIFICATION

(11) **EP 0 816 410 B1**
(45) Date of publication and mention of the grant of the patent: **28.04.2004**
(21) Application number: 97304729.3
(22) Date of filing: 30.06.1997
(51) Int. Cl.: C08G 18/38, C09D 11/00

(54) **Isocyanate-derived colored resins for use in phase change ink jet inks**
Von Isocyanat abgeleitete Farbharze zur Verwendung in Phasenaustausch-Tintenstrahltinten
Résines colorées dérivées d'isocyanate pour imprimante à jet d'encre à changement de phase

(30) Priority: 28.06.1996 US 672617
(43) Date of publication of application: 07.01.1998
(73) Proprietor: XEROX CORPORATION, Stamford, CT 06904-1600 (US)
(72) Inventor: Bui, Loc V., Valencia, CA 91355 (US); King, Clifford R., Salem, Oregon 97301 (US); Banning, Jeffery H., Hillsboro, Oregon 97124 (US); Titterington, Donald R., Tualatin, Oregon 97062 (US)
(74) Representative: Grünecker, Kinkeldey, Stockmair & Schwanhäusser Anwaltssozietät

(56) References cited:
- EP-A- 0 166 566
- FR-A- 1 219 438
- GB-A- 1 513 526
- US-A- 4 284 729
- US-A- 4 751 254
- US-A- 5 507 864

## Description

The present invention relates to colored resins made by reacting isocyanates with combinations of selected nucleophiles such as alcohols and/or amines. All or part of the selected nucleophiles can contain a chromogen which enables the resin to absorb light. The present invention also relates to phase change ink compositions, both generally and in specific compositions, containing such colored resins. Still further, the present invention relates to the process of using such phase change inks containing such colored resins in a printing device.

In general, phase change inks (sometimes referred to as "hot melt inks") are in the solid phase at ambient temperature, but exist in the liquid phase at the elevated operating temperature of an ink jet printing device. At the jet operating temperature, droplets of liquid ink are ejected from the printing device and, when the ink droplets contact the surface of the printing media, they quickly solidify to form a predetermined pattern of solidified ink drops. Phase change inks have also been used in other printing technologies such as gravure printing as referenced in U.S. Patent No. 5,496,879 and German Patent publications DE 4205636AL and DE 4205713AL assigned to Siegwerk Farbenfabrik Keller, Dr. Rung and Co.

Phase change inks for color printing generally comprise a phase change ink carrier composition which is combined with a phase change ink compatible colorant. Preferably, a colored phase change ink will be formed by combining the above-described ink carrier composition with compatible subtractive primary colorants. The subtractive primary colored phase change inks of this invention can comprise four component dyes, namely, cyan, magenta, yellow and black. These subtractive primary colored inks can be formed by using a single dye or a mixture of dyes. For example, magenta can be obtained by using a mixture of Solvent Red Dyes or a composite black can be obtained by mixing several dyes. U.S. Patent Nos. 4,889,506; 4,889,761; and 5,372,852 teach that the subtractive primary colorants employed typically may comprise dyes from the classes of Color Index (C.I.) Solvent Dyes, Disperse Dyes, modified Acid and Direct Dyes, and a limited number of Basic Dyes. The colorants can also include pigments as exemplified in U.S. Patent No. 5,221,335, assigned to Coates Electrographics LTD. U.S. Patent Application Serial No. 08/381,610, (corresponding to European Patent Application No. 0 723 099) directed to the use of a specific class of polymeric dyes in phase change ink compositions.

Phase change inks have also been used for applications such as postal marking or industrial marking and labelling.

Phase change inks are desirable for ink jet printers since they remain in a solid phase at room temperature, during shipping, long-term storage, and the like. Also, the problems associated with nozzle clogging due to ink evaporation are largely eliminated, thereby improving the reliability of ink jet printing. Furthermore, in the above-noted prior art phase change ink jet printers where the ink droplets are applied directly onto the printing medium the droplets solidify immediately upon contact with the substrate, migration of ink along the printing medium is prevented and dot quality is improved. This is also true of the processes and ink compositions described herein.

In addition to the above-referenced US patents, many other patents describe materials for use in phase change ink jet inks. Some representative examples include U.S. Patent Nos. 3,653,932; 4,390,396; 4,484,948; 4,684,956; 4,851,045; 4,889,560; 5,006,170; and 5,115,120; as well as EP Application Nos. 0187352 and 0206286. These materials can include paraffins, microcrystalline waxes, polyethylene waxes, ester waxes, fatty acids and other waxy materials, sulfonamide materials, resinous materials made from different natural sources (tall oil rosins and rosin esters are an example) and many synthetic resins, oligomers, polymers and co-polymers.

Separately, PCT Patent Application WO 94/14902, which was published on July 7, 1994 and is assigned to Coates Brothers PLC, teaches a hot melt ink containing a colorant and, as a vehicle for said hot melt ink, an oligourethane having a melting point of at least 65°C and obtained by reacting an aliphatic or aromatic diisocyanate with at least a stoichiometric amount of either: (i) a monohydric alcohol component; or (ii) a monohydric alcohol component followed by another different monohydric alcohol component; or (iii) a monohydric alcohol component, followed by a dihydric alcohol component, followed by a monohydric alcohol component.

This PCT patent application defines the monohydric alcohol component as either a monohydric aliphatic alcohol (e.g. C₁ to C₂₂ alcohols), an etherified dihydric aliphatic alcohol (e.g. propylene glycol methyl ether (PGME), dipropylene glycol methyl ether (DPGME), ethylene glycol butyl ether (EGBE), diethylene glycol butyl ether (DEGBE), tripropylene glycol butyl ether (TPGBE) and propylene glycol phenyl ether (PGPE); esterified dihydric aliphatic alcohol (e.g. the esterifying acid may be an ethylenically unsaturated acid (such as acrylic acid or methacrylic acid), thereby introducing ethylenic unsaturation into the oligourethane and rendering it suitable for further additional polymerization (curing) after having been applied to a substrate by hot melt printing); or dihydric polyalkylene glycol. This PCT Application further defined the dihydric alcohol component as a dihydric aliphatic alcohol or a dihydric polyalkylene glycol (e.g. ethylene glycol, polyethylene glycol (PEG 1500), polypropylene glycol (PPG 750, 1000 and 1500), trimethylene glycol, dipropylene glycol, methylpropanediol and 1,6-hexanediol).

Also, PCT Patent Application WO 94/04619, assigned to the General Electric Company, teaches the use of ionomeric materials in combination with image forming agents to form a hot melt ink jet ink. The ionomeric materials can include many different types of copolymeric or polymeric ionomers, including carboxyl-functional polyurethanes prepared from a diol or polyol and a hydroxyl acid. Many other carrier materials and colorants for the image forming agent of the invention are included in the PCT application.

As the number of applications of phase change inks have increased, there has evolved the need for new colorant materials that are suitable for these different applications. There is also a need for relatively low viscosity non-polymeric resins designed for phase change ink jet and other forms of phase change ink printing. The present invention offers a solution to these needs by combining in the same material a chromogen and a resin designed for phase change ink printing.

The present invention provides an isocyanate-derived colored monomeric, oligomeric or nonpolymeric resin comprising the reaction product of:
(a) an isocyanate; and
(b) at least one chromogen-containing nucleophile.

The present invention further provides an isocyanate-derived colored monomeric, oligomeric or nonpolymeric resin comprising the reaction product of:
(a) an isocyanate;
(b) a nucleophile selected from the group consisting of at least one alcohol, at least one amine, and mixtures thereof; and
(c) at least one chromogen-containing nucleophile.

Moreover, the present invention provides a phase change ink composition comprising in combination:-
(a) a mono-amide;
(b) a tackifier; and
(c) a colorant comprising at least one colored isocyanate-derived resin.

The present invention further provides a method for producing a layer of phase change colored ink on a surface of a substrate, which method comprises:-
(1) forming a phase change ink composition in the solid phase comprising an admixture of (a) a phase change carrier composition and (b) a compatible phase change colorant comprising at least one colored isocyanate-derived resin formed by the reaction of an isocyanate precursor and at least one alcohol;
(2) transferring said solid phase, phase change color ink composition to a phase change ink application means;
(3) raising the operating temperature of said application means to a level whereby a liquid phase, phase change colored ink composition is formed;
(4) providing a substrate in proximity to said application means;
(5) applying a predetermined pattern of said liquid phase, phase change colored ink composition to at least surface of said substrate; and
(6) lowering the temperature of said applied ink composition to form a solid phase, phase change ink pattern on the substrate.

The present invention further provides a method for producing a layer of phase change colored ink on a surface of a substrate, which method comprises:-
(1) employing in a printing apparatus a phase change ink composition in the solid phase comprising an admixture of (a) a phase change carrier composition and (b) a compatible phase change colorant comprising at least one colored isocyanate-derived resin formed by the reaction of an isocyanate precursor and at least one alcohol;
(2) applying the phase change ink composition in a desired pattern to an intermediate transfer surface; and
(3) tranferring the desired pattern of the phase change ink composition to the surface of the substrate.

Preferred embodiments of the present invention are set forth in the sub-claims.

It is an, advantage of the present invention that the colored isocyanate-derived resins are very pure, being free of salts and other insoluble contaminants.

It is another advantage of the present invention that the colored isocyanate-derived resins of the present invention, when used in conjunction with a typical carrier composition in a phase change ink formulation, obviate the need for a separate colorant.

It is yet a further advantage of the present invention that the colored isocyanate-derived resins may be substituted for one or more components in prior fatty amide containing phase change inks, such as the tetra-amide, mono-amide, tackifier, or plasticizer components.

These and other aspects, features and advantages are obtained by the use of reaction products of selected isocyanates with selected alcohols or mixtures of selected alcohols and/or selected amines or mixtures of selected amines, some or all of which may contain a chromogen, to produce isocyanate-derived resins suitable for use in phase change inks that may be employed in direct or indirect printing applications.

The term "chromogen" in the present specification and claims is used as defined on page 82 of "Colour and Constitution of Organic Molecules", by John Griffiths, ©1976 by Academic Press, to mean a reasonably well defined unsaturated system that is either colored, or can be rendered colored by the attachment of simple substituents.

The term "nucleophile" in the present specification and claims is used as defined on page 179 of "Advanced Organic Chemistry, 3rd Edition" by Jerry March, ©1985 by John Wiley and Sons, to describe a reagent that brings an electron pair to a reaction to form a new bond. The preferred nucleophiles of this invention are alcohols, amines and chromogen-containing alcohols or amines, but it is understood that other nucleophilic functional groups that are capable of reacting with the isocyanate moiety could also be used in the invention.

The term "oligomer" in the current specification and claims is used as defined on page 7 of "Polymer Chemistry - The Basic Concepts" by Paul Hiemenz, ©1984 by Marcel Dekker, Inc., to describe a term coined to designate molecules for which n (representing the number of repeating monomer units) is less than 10.

The term "colored isocyanate-derived resin" as used in the present specification and claims is defined as any monomeric, oligomeric or non-polymeric resinous material derived from the reaction of mono-, di-, or poly-isocyanates with a suitable nucleophilic molecule containing a chromogen, the mixture of a monofunctional alcohol and a suitable nucleophilic molecule containing a chromogen, the mixture of a monofunctional amine and a suitable nucleophilic molecule containing a chromogen, or the mixture of a monofunctional alcohol, a monofunctional amine and a suitable nucleophilic molecule containing a chromogen.

Preferred alcohols to react with difunctional and higher isocyanates to make the isocyanate-derived resins include any monohydric alcohol. For instance, the monohydric alcohol could be any aliphatic alcohol [e.g., a C₁-C₂₂ or higher linear alcohol, any branched alcohol or any cyclic aliphatic alcohol such as methanol, ethanol, (n- and iso)-propanol, (n-, iso-, t-) butanol, (n-, iso-, t-) pentanol, (n-, iso-, t-) hexanol, (n-, iso-, t-) octanol, (n-, iso-, t-) nonanol, (n- and branched) decanols, (n- and branched) undecanols, (n- and branched) dodecanols, (n- and branched) hexadecanols, (n- and branched) octadecanols, 3-cyclohexyl-1-propanol, 2-cyclohexyl-1-ethanol, cyclohexylmethanol, cyclohexanol, 4-methyl cyclohexanol, 4-ethylcyclohexanol, 4-t-butylcyclohexanol]; an aliphatic/aromatic alcohol [e.g., benzyl alcohol, octyl, nonyl, and dodecylphenol alkoxylates of octyl, nonyl, and dodecylphenol, and alkoxyphenol]; aromatic alcohols such as phenol, naphthol, and their derivatives; fused ring alcohols (e.g., rosin alcohols, hydroabietyl alcohol, cholesterol, vitamin E) and other suitable alcohols (e.g., N,N-dimethyl-N-ethanolamine, stearamide-monoethanolamine, tripropyleneglycol monomethylether, hydroxybutanone, menthol, isoborneol, terpineol, 12-hydroxy stearyl stearamide). It will be obvious to those skilled in the art that small amounts (on a molar basis) of polyols could also be incorporated into the reaction mixture to produce oligomeric species in the resins if so desired. The preferred alcohols are hydroabietyl alcohol, octylphenol ethoxylate and octadecyl alcohol.

Preferred alcohols to react with monofunctional isocyanates to make the isocyanate-derived resins include any monohydric alcohol. For instance, the monohydric alcohol could be any aliphatic alcohol [e.g., a C₁-C₂₂ or higher linear alcohol, any branched alcohol or any cyclic aliphatic alcohol such as methanol, ethanol, (n- and iso-)propanol, (n-, iso-, and t-) butanol, (n-, iso-, t-) pentanol, (n-, iso-, t-) hexanol, (n-, iso-, t-) octanol, (n-, iso-, t-) nonanol, (n- and branched) decanols, (n-and branched) undecanols, (n- and branched) dodecanols, (n- and branched) hexadecanols, (n- and branched) octadecanols, 3-cyclohexyl-1-propanol, 2-cyclohexyl-1-ethanol, cyclohexylmethanol, cyclohexanol, 4-methyl cyclohexanol, 4-ethylcyclohexanol, 4-t-butylcyclohexanol]; an aliphatic/aromatic alcohol (e.g., benzyl alcohol, octyl, nonyl, and dodecylphenol alkoxylates or octyl, nonyl, and dodecylphenol, alkoxyphenol); aromatic alcohols such as phenol, naphthol, and their derivatives; fused ring alcohols (e.g., rosin alcohols, hydroabietyl alcohol, cholesterol, vitamin E) and other suitable alcohols (e.g., N,N-dimethyl-N-ethanolamine, stearamide-monoethanolamine, tripropyleneglycol monomethylether, hydroxybutanone, menthol, isoborneol, terpineol, 12-hydroxy stearyl stearamide), as well as multifunctional alcohols such as ethylene glycol, diethylene glycol, triethylene glycol, dimethylolpropionic acid, sucrose, polytetramethylene glycol (MW < ∼ 3000), polypropylene glycol (MW < ∼ 3000), polyester polyols (MW < ∼ 3000), polyethylene glycol (MW < ∼ 3000), pentaerythritol, triethanol amine, glycerin, 1,6-hexanediol, N-methyl-N,N-diethanol amine, trimethylol propane, N,N,N',N'-tetrakis(2-hydroxypropyl)ethylenediamine. The preferred alcohol is octadecanol.

Preferred amines to react with monofunctional isocyanates to make the isocyanate-derived resins include any monofunctional amine, with the exception of tertiary amines void of other nucleophilic functional groups (e.g., triethylamine). For instance, the monoamine could be any aliphatic primary or secondary amine [e.g., a C₁-C₂₂ or higher linear amine, any branched amine or any cyclic aliphatic amine such as methyl amine, ethyl amine, (n- and iso-)propyl amine, (n-, iso-, and t-) butyl amine, (n-, iso-, t-) pentyl amine, (n-, iso-, t-) hexyl amine, (n-, iso-, t-) octyl amine, (n-, iso-, t-) nonyl amine, (n- and branched) decyl amine, (n- and branched) undecyl amine, (n- and branched) octadecyl amine, (n- and branched) hexadecyl amine, (n- and branched) dodecyl amine, dimethyl amine, diethyl amine, di(n-, and iso-)propyl amine, di(n-, iso-, t-)butyl amine, di(n-, iso-, t-) pentyl amine, di(n-, iso-, t-) hexyl amine, di(n-, iso-, t-) cyclohexyl amine, di(n-, iso-, t-) heptyl amine, di(n-, iso-, t-) octyl amine, di(n-, iso-, t-) decyl amine, di(n-, iso-, t-) octadecyl amine, di(n-, iso-, t-) dodecyl amine, cyclohexyl amine, 2,3-dimethyl-1-cyclohexylamine, piperidine, pyrrolidine]; any aliphatic/aromatic amines (e.g., benzyl amine or analogues with longer or additional alkyl chains); aromatic amines such as aniline, anisidine; fused ring amines such as rosin amine, dehydroabietyl amine, dihydroabietyl amine, hydroabietyl amine; and miscellaneous amines (e.g., adamantyl amine; isonipecotamide; polyoxyalkylenemono-, di-, or triamines, such as M-, D-, and T-series Jeffamines available commercially from Huntsman Chemical Company of Austin, Texas; 3,3'-diamino-N-methyl-dipropylamine; as well as multifunctional amines such as polyethylene imine; ethylene diamine; hexamethylene diamine; isomers of cyclohexyldiamines; 1,3-pentadiamine; 1,12-dodecanediamine; 3-dimethylaminopropylamine; 4,7,10-trioxa-1,13-tridecanediamine; diethylene triamine; 3,3-diamino-N-methyldipropylamine; tris(2-aminoethyl)amine). The preferred amine is octadecylamine.

Preferred amines to react with difunctional and higher isocyanates to make the isocyanate-derived resins include any monofunctional amine, with the exception of tertiary amines void of other nucleophilic functional groups (e.g., triethylamine). For instance, the monoamine could be any aliphatic primary or secondary amine (e.g., a C₁-C₂₂ or higher linear amine, any branched amine or any cyclic aliphatic amine) such as methyl amine, ethyl amine, (n- and iso-)propyl amine, (n-, iso-, and t-) butyl amine, (n-, iso-, t-) pentyl amine, (n-, iso-, t-) hexyl amine, (n-, iso-, t-) octyl amine, (n-, iso-, t-) nonyl amine, (n- and branched) decyl amine, (n- and branched) undecyl amines, (n- and branched) dodecyl amines, (n- and branched) hexadecyl amines, (n- and branched) dodecyl amines, dimethyl amine, diethyl amine, di(n- and iso-)propyl amines, di(n-, iso-, t-)butyl amine, di(n-, iso-, t-) pentyl amine, di(n-, iso-, t-) hexyl amine, di(n-, iso-, t-) cyclohexyl amine, di(n-, iso-, t-) heptyl amine, di(n-, iso-, t-) octyl amine, di(n-, iso-, t-) decyl amine, di(n-, iso-, t-) dodecyl amine, di(n-, iso-, t-) octadecyl amine, cyclohexyl amine, 2,3-dimethyl-1-cyclohexylamine, piperidine, pyrrolidine; an aliphatic/aromatic amine (e.g., benzyl amine or analogues with longer or additional alkyl chains); aromatic amines such as aniline, anisidine; fused ring amines such as rosin amine, dehydroabietyl amine, dihydroabietyl amine, hydroabietyl amine; and miscellaneous amines (e.g., adamantyl amine; isonipecotamide; polyoxyalkylenemonoamines, such as M-series Jeffamines available commercially from Huntsman Chemical Company of Austin, Texas; 3,3'-diamino-N-methyl-dipropylamine). It will be obvious to those skilled in the art that small amounts (on a molar basis) of polyamines could also be incorporated into the reaction mixture to produce oligomeric species in the resins if so desired. The preferred amine is octadecyl amine.

Additionally, hydroxyl/amino containing compounds can be employed (with di- and higher functionality isocyanates taking advantage of the difference in reactivity of the amine over the hydroxyl group, or with monoisocyanates reacting with the amine preferentially or with both the amine and the hydroxyl groups). Examples of this include ethanolamine, diethanolamine.

Additionally amides or other nucleophile containing compounds can be reacted with the isocyanates (mono, di). Some examples include: urea, oleamide, stearamide.

Preferred precursors to the isocyanate-derived resins invention include mono-, di- and other poly-isocyanates. Examples of monoisocyanates include octadecylisocyanate; octylisocyanate; butyl and t-butylisocyanate; cyclohexyl isocyanate; adamantyl isocyanate; ethylisocyanatoacetate; ethoxycarbonylisocyanate; phenylisocyanate; alphamethylbenzyl isocyanate; 2-phenylcyclopropyl isocyanate; benzylisocyanate; 2-ethylphenylisocyanate; benzoylisocyanate; meta and para-tolylisocyanate; 2-, 3-, or 4-nitrophenylisocyanates; 2-ethoxyphenyl isocyanate; 3-methoxyphenyl isocyanate; 4-methoxyphenylisocyanate; ethyl 4-isocyanatobenzoate; 2,6-dimethylphenylisocyante; 1-naphthylisocyanate; (naphthyl)ethylisocyantes. Examples of diisocyanates include isophorone diisocyanate (IPDI); toluene diisocyanate (TDI); diphenylmethane-4,4'-diisocyanate (MDI); hydrogenated diphenylmethane-4,4'-diisocyanate (H₁₂MDI); tetra-methyl xylene diisocyanate (TMXDI); hexamethylene-1,6-diisocyanate (HDI); hexamethylene-1,6-diisocyanate; napthylene-1,5-diisocyanate; 3,3'-dimethoxy-4,4'-biphenyldiisocyanate; 3,3'-dimethyl-4,4'-bimethyl-4,4'-biphenyldiisocyanate; phenylene diisocyanate; 4,4'-biphenyldiisocyanate; trimethylhexamethylene diisocyanate; tetramethylene xylene diisocyanate; 4,4'-methylenebis(2,6-diethylphenyl isocyanate); 1,12-diisocyanatododecane; 1,5-diisocyanato-2-methylpentane; 1,4-diisocyanatobutane; and cyclohexylene diisocyanate and its isomers; uretidione dimers of HDI. Examples of triisocyanates or their equivalents include the trimethylolpropane trimer of TDI, isocyanurate trimers of TDI, HDI, IPDI, and biuret trimers of TDI, HDI, IPDI. Examples of higher isocyanate functionalities include copolymers of TDI/HDI, as well as MDI oligomers.

Any suitable reaction condition for making urethane or urea compounds by condensing alcohols and/or amines with isocyanates may be employed. Preferably, the reaction is carried out at elevated temperatures (e.g. 60°C to 160°C) in the presence of a urethane reaction catalyst such as dibutyltindilaurate, bismuth tris-neodecanoate, cobalt benzoate, lithium acetate, stannous octoate or triethylamine. The reaction conditions preferably are conducted in an inert atmosphere, such as argon or nitrogen gas or other suitable atmosphere, to prevent oxidizing or yellowing the reaction products and to prevent undesirable side reactions. The mole ratio of reactants is adjusted so that the isocyanate functionalities are completely consumed in the reaction with a slight molar excess of alcohol or amine remaining. Conceptually the reactants can be added together in any order and/or added to the reaction as physical mixtures. However, in the preferred embodiments of the invention, reaction conditions and the order of the addition of reactants are carefully controlled for several reasons. First, reaction conditions and reactant additions are chosen to provide a controlled exothermic reaction. Secondly, when reacting mixtures of alcohols and/or amines with diisocyanates such as isophorone diisocyanate (IPDI), the order of addition of the different nucleophiles to the reaction is chosen to tailor the distribution of diurethane molecules, and/or mixed urethane/urea molecules, and/or diurea molecules in the final resin. When doing this, the different reactivities to isocyanates of alcohols versus amines are employed, as are the reactivities of the two separate isocyanate groups on IPDI. See J.H. Saunders and K.C. Frisch's "Polyurethanes Part I, Chemistry" published by Interscience of New York, New York in 1962 and Olin Chemicals' Luxate® IM isophorone diisocyanate technical product information sheet which provide a further explanation of this chemistry. Finally, when using chromogen-containing nucleophilic molecules that have more than one nucleophile per molecule, the order of addition of the nucleophile to the reaction mixture is chosen so as to minimize the number of oligomeric species in the final resin. This is done to minimize the final viscosity of the resin. The products of this reaction are colored, generally transparent solids having melting points in the range of 20°C to 150°C and viscosities in the range of 10 m Pa·s (cPs) to 2000 m Pa·s (cPs) at 150°C and T_{g}'s of -30°C to 100°C.

The preferred chromogen-containing nucleophilic molecules include dyes such as those disclosed in U.S. Patent Nos. 3,994,835 and 4,132,840, assigned to Bayer, and U.S. Patent Nos. 4,284,729; 4,507,407; 4,751,254; 4,846,846; 4,912,203; 5,270,363 and 5,290,921 assigned to Milliken Research Corporation. Also suitable may be any Color Index (C.I.) Solvent Dyes, Disperse Dyes, modified Acid and Direct Dyes, Basic Dyes, Sulphur Dyes or Vat Dyes that contain an alcohol, amine, or other nucleophilic functional group that is capable of reacting with an isocyanate. The more preferred chromogen-containing nucleophilic molecules contain at least one alcohol functional group. Most preferably this alcohol functional group is terminal to a polyethylene oxide, polypropylene oxide, or a polyethylene/polypropylene oxide polymeric chain.

Phase change inks of the current invention incorporate the colored isocyanate-derived resin as all or a portion of their colorant. The colored isocyanate-derived resins may be either the sole colorant material or may be used in combination with conventional phase change ink colorant materials such as Color Index (C.I.) Solvent Dyes, Disperse Dyes, modified Acid and Direct Dyes, Basic Dyes, Sulphur Dyes or Vat Dyes and/or the polymeric dyes disclosed in U.S. Patent Application Serial No. 08/381,610, and/or pigments.

Besides colorant material, phase change inks of this invention contain a phase change carrier system or composition. The phase change carrier composition is generally designed for use in either a direct printing mode or for use in an offset or indirect transfer printing system. In the direct printing mode, the phase change carrier composition is generally made up of one or more chemicals that provide the necessary properties to allow the phase change ink (1) to be applied in a thin film of uniform thickness on the final receiving substrate when cooled to the ambient temperature after printing directly to the substrate; (2) to be ductile while retaining sufficient flexibility so that the applied image on the substrate will not fracture upon bending; and (3) to possess a high degree of lightness, chroma, transparency and thermal stability. In an offset or indirect transfer printing mode, the phase change carrier composition is designed to possess not only the above mentioned properties, but also certain fluidic and mechanical properties necessary for use in such a system, as described in U.S. Patent No. 5,389,958. The isocyanate-derived colored materials are tailored to have the desirable properties mentioned above when used in the carrier composition of the inks of the present invention by varying one or more of the readily available commodity chemical precursors.

Prior art phase change inks for use in direct and indirect transfer printing systems are described in U.S. Patent Nos. 4,889,560 and 5,372,852. These inks consist of a phase change ink carrier composition comprising one or more fatty amide-containing materials, usually consisting of a mono-amide wax and a tetra-amide resin, one or more tackifiers, one or more plasticizers and one or more antioxidants, in combination with compatible colorants. The colored isocyanate-derived resins used in the present invention replace one or more of the ingredients in the above carrier. The colored isocyanate-derived resins used in the present invention therefore can be used as both the colorant for the ink and as an integral part of the carrier composition. The advantages of this are:
(1) The colored resins of this invention are very compatible with conventional phase change ink carrier materials. It is common to use these colored resins so that they comprise as much as 20% to 30% by weight of the ink formulation and a percentage of composition of up to 50% by weight is possible. This provides for relatively high color loadings in the ink while maintaining optimal physical properties in the ink formulation.
(2) Very high color strengths can be obtained in the ink because the colored resins can be combined with conventional colorants in the same formulation. This is important in applications where very thin films of ink are needed, such as hot melt gravure printing or very high resolution phase change ink jet printing.
(3) The colored resins of this invention are very pure, that is free of salts and other insoluble contaminants. This makes the inks made from these materials easy to filter and provides for high reliability in ink jet printing devices. This is a major advantage over many conventional phase change ink colorants.

Many other patents describe other materials for use in phase change ink jet inks. Some representative examples include the aforementioned U.S. Patent Nos. 3,653,932; 4,390,396; 4,484,948; 4,684,956; 4,851,045; 5,006,170; 5,151,120; EP Application Nos. 0187352 and 0206286; and PCT Patent Application WO 94/04619. These other materials can include paraffins, microcrystalline waxes, polyethylene waxes, ester waxes, amide waxes, fatty acids, fatty alcohols, fatty amides and other waxy materials, sulfonamide materials, resinous materials made from different natural sources (tall oil rosins and rosin esters are an example) and many synthetic resins, oligomers, polymers, co-polymers, and ionomers. It will be obvious to those skilled in the art that the colored isocyanate-derived resins of this invention could be used as the colorant material in inks made from many different combinations of these materials.

The aforementioned U.S. Patent No. 5,496,879 and German Patent Publications DE 4205636AL and DE 4205713AL, assigned to Siegwerk Farbenfabrik Keller, Dr. Rung and Co., describe materials used for phase change or hot melt gravure printing. It will be obvious to those skilled in the art that the colored isocyanate-derived resins of this current invention would be compatible with those materials and could also be used in that application or other similar printing methods that employ hot melt ink technology.

It also will be obvious to those skilled in the art that other ink colors besides the subtractive primary colors are desirable for applications, such as postal marking or industrial marking and labeling using phase change printing, and that this invention is applicable to these needs. Infrared (IR) or ultraviolet (UV) absorbing dyes can also be incorporated into the inks of this invention for use in applications such as "invisible" coding or marking of products.

The present invention is further described in detail by means of the following Examples and Comparisons. All parts and percentages are by weight and all temperatures are degrees Celsius unless explicitly stated otherwise. It is to be noted that while the following examples may recite only one particular colored isocyanate-derived resin, it is to be understood that each individual example is only illustrative and any of the primary colorants (cyan, yellow, magenta and black) used in subtractive color printing could be employed in each instance.

### EXAMPLE 1

### The Reaction Product of Octylphenol Ethoxylate, Isophorone Diisocyanate and Yellow Reactive Colorant

About 525.0 grams (4.73 equiv.) of isophorone diisocyanate¹ and 1.5 grams of dibutyltindilaurate² catalyst, followed by about 986 grams (3.88 equiv.) of octylphenol ethoxylate³, were added to a 3000 ml three-neck resin kettle equipped with a Trubore stirrer, N₂ atmosphere inlet, and a thermocouple-temperature controller. The reaction mixture was heated to about 135°C with stirring under nitrogen. After 2.0 hours at about 135°C, about 346.1 grams (0.497 equiv.) of a yellow polymeric colorant corresponding to Colorant A from Table I of U.S. Patent No. 5,231,135 were added and the reaction mixture was heated for approximately 2 hours. An additional about 110.0 grams (0.433 equiv.) of octylphenol ethoxylate³ were added and the reaction mixture was heated at about 150°C for approximately 2 hours. An FT-IR of the product was obtained to insure all of the isocyanate (NCO) functionality was consumed. The absence (disappearance) of a peak at about 2285 cm⁻¹ (NCO) and the appearance (or increase in magnitude) of peaks at about 1740-1680 cm⁻¹ and about 1540-1530 cm⁻¹ corresponding to urethane frequencies were used to confirm this. The diurethane reaction product was poured into aluminum molds and allowed to cool and harden. This final colored resin product was characterized by the following physical properties: viscosity of about 121 mPa·s (cPs) as measured by a Ferranti-Shirley cone-plate viscometer at about 140°C, a melting point of 38°C to 115 °C as measured by electrothermal capillary melting point apparatus, a T_{g} of about 12.4 °C as measured by differential scanning calorimetry using a DuPont 2100 calorimeter at a scan rate of 20°C/minute, and a spectral strength of about 5634 milliliters · Absorbance Units per gram at λₘₐₓ as measured by dilution in n-butanol using a Perkin Elmer Lambda 25 UV/VIS spectrophotometer.
¹Desmodur I - Isophorone diisocyanate available from Bayer Corp. of Pittsburg, Pennsylvania.
²Dibutyltindilaurate available from Aldrich Chemicals of Milwaukee, Wisconsin.
³IGEPAL CA-210 octylphenol ethoxylate is available from Rhone-Poulenc Co., Cranbury, NJ.

### EXAMPLE 2

### The Reaction Product of Octylphenol Ethoxylate, Isophorone Diisocyanate and Cyan Reactive Colorant

About 525.0 grams (4.73 equiv.) of isophorone diisocyanate¹, about 1.5 grams of dibutyltindilaurate² catalyst, and about 992.0 grams (3.91 equiv.) of octylphenol ethoxylate³ were added to a 3000 ml three-neck resin kettle equipped with a Trubore stirrer, a N₂ atmosphere inlet, and a thermocouple-temperature controller. The reaction mixture was heated to about 135°C and held for approximately 3.5 hours with stirring under nitrogen. About 240.6 grams (0.473 equiv.) of a cyan polymeric colorant⁴ then were added and the mixture was heated to about 135°C for 2 hours. An additional about 110.0 grams (0.433 equiv.) of octylphenol ethoxylate³ were added and the reaction mixture was heated at about 150°C for approximately 2 hours. An FT-IR of the product was obtained to insure all of the isocyanate (NCO) functionality was consumed. The absence (disappearance) of a peak at about 2285 cm⁻¹ (NCO) and the appearance (or increase in magnitude) of peaks at about 1740-1680 cm⁻¹ and about 1540-1530 cm⁻¹ corresponding to urethane frequencies were used to confirm this. The diurethane reaction product was poured into aluminum molds and allowed to cool and harden. This final colored resin product was characterized by the following physical properties: viscosity of about 181.8 m Pa·s (cPs) as measured by a Ferranti-Shirley cone-plate viscometer at about 140°C, a melting point of 59.9-70.2°C as measured by electrothermal capillary melting point apparatus, and a T_{g} of about 23.1°C as measured by differential scanning calorimetry using a DuPont 2100 calorimeter at a scan rate of 20°C/minute, and a spectral strength of about 5588 milliliters · Absorbance Units per gram at λₘₐₓ as measured by dilution in n-butanol using a Perkin Elmer Lambda 25 UV/VIS spectrophotometer.
¹Desmodur I - Isophorone diisocyanate available from Bayer Corp. of Pittsburg, Pennsylvania.
²Dibutyltindilaurate available from Aldrich Chemicals of Milwaukee, Wisconsin.
³IGEPAL CA-210 octylphenol ethoxylate is available from Rhone-Poulenc Co., Cranbury, NJ.
⁴Experimental Blue III 9495-28 available from Milliken and Company of Spartanburg, South Carolina.

### EXAMPLE 3

### The Reaction Product of Octylphenol Ethoxylate, Isophorone Diisocyanate and Blended Black Reactive Colorants

About 150.0 grams (0.295 equiv.) of a cyan polymeric reactive colorant¹, about 225.0 grams (0.147 equiv.) of a violet polymeric colorant corresponding to Colorant U from Table I of U.S. Patent No. 5,231,135; about 345.0 grams (0.552 equiv.) of an orange polymeric reactive colorant corresponding to Colorant B from Table I of U.S. Patent No. 5,231,135; about 450.0 grams (4.054 equiv.) of isophorone diisocyanate² and about 0.18 grams of dibutyltindilaurate catalyst³ were added to a 3000 ml three-neck resin kettle equipped with a Trubore stirrer, a N₂ atmosphere inlet, and a thermocouple-temperature controller. The reaction mixture was heated to about 90°C with stirring under nitrogen. After 3.5 hours at about 90°C, about 1.0 gram of additional dibutyltindilaurate catalyst³ and about 805.0 grams (3.012 equiv.) of octylphenol ethoxylate⁴ were added and the temperature was raised to about 130°C and held for approximately 3.5 hours. An FT-IR of the product was obtained to insure all of the isocyanate (NCO) functionality was consumed. The absence (disappearance) of a peak at about 2285 cm⁻¹ (NCO) and the appearance (or increase in magnitude) of peaks at about 1740-1680 cm⁻¹ and about 1540-1530 cm⁻¹ corresponding to urethane frequencies were used to confirm this. The diurethane reaction product was poured into aluminum molds and allowed to cool and harden. This final colored resin product was characterized by the following physical properties: viscosity of about 163.0 m Pa·s (cPs) as measured by a Ferranti-Shirley cone-plate viscometer at about 140°C, a melting point of below ambient temperature and not measurable by electrothermal melting point apparatus, a T_{g} of about 3.8°C as measured by differential scanning calorimetry using a DuPont 2100 calorimeter at a scan rate of 20°C/minute, and a spectral strength of about 4667 milliliters · Absorbance Units per gram at λₘₐₓ as measured by dilution in n-butanol using a Perkin Elmer Lambda 25 UV/VIS spectrophotometer.
¹Experimental Blue III 9495-28 available from Milliken and Company of Spartanburg, South Carolina.
²Desmodur I - Isophorone diisocyanate available from Bayer Corp. of Pittsburg, Pennsylvania.
³Dibutyltindilaurate available from Aldrich Chemicals of Milwaukee, Wisconsin.
⁴Triton X15 octylphenol ethoxylate is available from Union Carbide Chemicals and Plastics Company Inc., of Danbury, Connecticut.

### EXAMPLE 4

### The Reaction Product of Hydroabietyl Alcohol, Octadecyl Amine, Cyan Reactive Colorant, and Isophorone Diisocyanate

About 150.0 grams (1.35 equiv.) of isophorone diisocyanate¹ and about 0.22 grams of dibutyltindilaurate² catalyst, about 240.2 grams (0.676 equiv.) of hydroabietyl alcohol³, preheated to about 90°C, were added to a 1000 ml three-neck resin kettle equipped with a Trubore stirrer, a N₂ atmosphere inlet, and a thermocouple-temperature controller. The reaction mixture was heated to about 130°C under nitrogen. After 1 hour at room temperature, about 90.9 grams (0.338 equiv.) of octadecyl amine⁴ were added and the temperature raised to about 150°C and held for approximately 1 hour. A cyan polymeric reactive colorant⁵ (about 68.8 grams, 0.1352 moles) was then added and allowed to react for 2 hours. Additional hydroabietyl alcohol³ (about 73.7 grams, 0.2073 moles), preheated to about 90°C, was added and the reaction temperature was increased to about 155°C and held for 2 hours. An FT-IR of the product was obtained to insure all of the isocyanate (NCO) functionality was consumed. The absence (disappearance) of a peak at about 2285 cm⁻¹ (NCO) and the appearance (or increase in magnitude) of peaks at about 1705-1635 cm⁻¹ and about 1515-1555 cm⁻¹ corresponding to urea frequencies and at about 1740-1680 cm⁻¹ and about 1540-1530 cm⁻¹ corresponding to urethane frequencies were used to confirm this. The urethane/urea reaction product was poured into aluminum molds and allowed to cool and harden. This final colored resin product was characterized by the following physical properties: viscosity of about 419.5 mPa·s (cPs) as measured by a Ferranti-Shirley cone-plate viscometer at about 140°C, a melting point of 49.7-119.7°C as measured by an electrothermal capillary melting point apparatus, a T_{g} of about 15.5 °C as measured by differential scanning calorimetry using a DuPont 2100 calorimeter at a scan rate of 20°C/minute, and a spectral strength of about 4436 milliliters · Absorbance Units per gram at λₘₐₓ as measured by dilution in n-butanol using a Perkin Elmer Lambda 25 UV/VIS spectrophotometer.
¹Luxate IM - Isophorone diisocyanate available from OLIN Corp. of Stanford, CT.
²Dibutyltindilaurate available from Aldrich Chemicals of Milwaukee, Wisconsin.
³Abitol E - Hydroabietyl alcohol available from Hercules inc., of Wilmington, Delaware.
⁴ARMEEN 18D FLK - Octadecyl amine available from AKZO NOBEL Chemicals Inc. of McCook, ILL.
⁵Experimental Blue III 9495-28 available from Milliken and Company of Spartanburg, South Carolina.

### EXAMPLE 5

### The Reaction Product of Octadecyl Amine, Yellow Reactive Colorant and Isophorone Diisocyanate

About 150.0 grams (1.35 equiv.) of isophorone diisocyanate¹ and about 0.22 grams of dibutyltindilaurate² catalyst were added to a 1000ml three-neck resin kettle equipped with a Trubore stirrer, a N₂ atmosphere inlet, and a thermocouple-temperature controller. About 272 grams (1.011 equiv.) of octadecyl amine³ were added over 1 hour while heating to about 145°C under nitrogen. The reactive diurea mixture was held at temperature for 1 hour and a yellow polymeric colorant corresponding to Colorant A from Table I of U.S. Patent No. 5,231,135 (about 98.9 grams, 0.142 equiv.) was then added and allowed to react with the remaining isophorone diisocyanate for 3 hours. Additional octadecyl amine³ (about 60.0 grams, 0.223 equiv.) was then added to ensure complete consumption of the isophorone diisocynate and the temperature increased to 155°C and held for 2 hours. An FT-IR of the product was obtained to insure all of the isocyanate (NCO) functionality was consumed. The absence (disappearance) of a peak at about 2285 cm⁻¹ (NCO) and the appearance (or increase in magnitude) of peaks at about 1705-1635 cm⁻¹ and about 1515-1555 cm⁻¹ corresponding to urea frequencies were used to confirm this. The urethane colorant modified diurea resin reaction product was poured into aluminum molds and allowed to cool and harden. This final colored resin product was characterized by the following physical properties: viscosity of about 325.0 mPa·s (cPs) as measured by a Ferranti-Shirley cone-plate viscometer at about 140°C, a melting point of 83.2°C to 124.7°C as measured by differential scanning calorimetry using an electrothermal capillary melting point apparatus, and a T_{g} of about -15.8°C as measured by differential scanning calorimetry using a DuPont 2100 calorimeter at a scan rate of 20°C/minute, and a spectral strength of about 2532 milliliters · Absorbance Units per gram at λₘₐₓ as measured by dilution in n-butanol using a Perkin Elmer Lambda 25 UV/VIS spectrophotometer.
¹Luxate IM - Isophorone diisocyanate available from OLIN Corp. of Stanford, CT.
²Dibutyltindilaurate available from Aldrich Chemicals of Milwaukee, Wisconsin.
³ARMEEN 18D FLK - Octadecyl amine available from AKZO NOBEL Chemicals Inc. of MeCook, ILL.

### EXAMPLE 6

### Yellow Ink Made From Amide Wax, Tetra-amide Resin and Colored Urethane Resin

In a stainless steel beaker were combined about 500 grams of Witco S-180 stearyl stearamide¹, about 125 grams of Union Camp Unirez 2970 tetra-amide resin², about 208 grams of the reaction product colored resin from Example 1, and about 1.6 grams of Uniroyal Naugard 445 antioxidant³. The materials were melted together at a temperature of about 140°C in an oven, then blended by stirring in a temperature controlled mantle at about 115°C for about 1/2 hour. After stirring, the yellow ink was filtered through a heated Mott apparatus (available from Mott Metallurgical) using #3 Whatman filter paper and a pressure of about 103 kPa (15 psi). The filtered phase change ink was poured into molds and allowed to solidify to form ink sticks. This final yellow ink product was characterized by the following physical properties: viscosity of about 15.6 mPa·s (cPs) as measured by a Ferranti-Shirley cone-plate viscometer at about 140°C, a melting point of about 89°C as measured by differential scanning calorimetry using a DuPont 2100 calorimeter, and a T_{g} of about 8°C as measured by Dynamic Mechanical Analysis using a Rheometrics Solids Analyzer (RSAII). The spectral strength of the ink was determined using a spectrophotographic procedure based on the measurement of the colorant in solution by dissolving the solid ink in butanol and measuring the absorbance using a Perkin Elmer Lambda 2S UV/VIS spectrophotometer. The spectral strength of the ink was measured as about 1635 milliliters · Absorbance Units per gram at λₘₐₓ.
¹Kemamide S-180 - Stearyl stearamide available from Witco Chemical Company of Memphis, Tennessee.
²Unirez 2970 - Tetra-amide available from Union Camp Corporation of Wayne, New Jersey.
³Naugard 445 - antioxidant available from Uniroyal Chemical Company of Oxford, Connecticut.

### EXAMPLE 7

### Cyan Ink Made From Amide Wax, Tackifier Resin and Colored Urethane Resin

About 275 grams of Kemamide S-180 stearyl stearamide¹, about 112.5 grams of a rosin ester tackfier available commercially as Arakawa KE-100², about 112.5 grams of the colored resin reaction product of Example 2, and about 1.0 grams of Uniroyal Naugard 445 antioxidant³ were combined in a stainless steel beaker. The materials were melted together at a temperature of about 140°C in an oven, then blended by stirring in a temperature controlled mantle at about 115°C for about 1/2 hour. After stirring for about 1/2 hour, the cyan ink was filtered through a heated Mott apparatus (available from Mott Metallurgical) using #3 Whatman filter paper and a pressure of about 103 KPa (15 psi). The filtered phase change ink was poured into molds and allowed to solidify to form ink sticks. This final ink product was characterized by the following physical properties: viscosity of about 12.9 mPa·s (cPs) as measured by a Ferranti-Shirley cone-plate viscometer at about 140°C, a melting point of about 89°C as measured by differential scanning calorimetry using a DuPont 2100 calorimeter, and a T_{g} of about 37°C as measured by Dynamic Mechanical Analysis using a Rheometrics Solids Analyzer (RSAII). The spectral strength of the ink was determined using a spectrophotographic procedure based on the measurement of the colorant in solution by dissolving the solid ink in butanol and measuring the absorbance using a Perkin Elmer Lambda 2S UV/VIS spectrophotometer. The spectral strength of the ink was measured as about 1323 milliliters · Absorbance Units per gram at λₘₐₓ.
¹Kemamide S-180 - Stearyl Stearamide available from Witco Chemical Company of Memphis, Tennessee.
²KE-100 - Glycerol ester of hydrogenated abietic (rosin) acid available from Arakawa Chemical Industries, Ltd. of Osaka, Japan.
³Naugard 445 - antioxidant available from Uniroyal Chemical Company of Oxford, Connecticut.

### EXAMPLE 8

### Black Ink Made From Amide Wax, Tackifier Resin and Colored Urethane Resin

About 275 grams of Kemamide S-180 stearyl stearamide¹, about 112.5 grams of a rosin ester tackfier available commercially as Arakawa KE-100², about 112.5 grams of the colored resin reaction product of Example 3, and about 1.0 grams of Uniroyal Naugard 445 antioxidant³ were combined in a stainless steel beaker. The materials were melted together at a temperature of about 140°C in an oven, then blended by stirring in a temperature controlled mantle at about 115°C for about 1/2 hour. After stirring for about 1/2 hour, the black ink was filtered through a heated Mott apparatus (available from Mott Metallurgical) using #3 Whatman filter paper and a pressure of about 103 KPa (15 psi). The filtered phase change ink was poured into molds and allowed to solidify to form ink sticks. This final ink product was characterized by the following physical properties: viscosity of about 12.8 mPa·s (cPs) as measured by a Ferranti-Shirley cone-plate viscometer at about 140°C, a melting point of about 91°C as measured by differential scanning calorimetry using a DuPont 2100 calorimeter, and a T_{g} of about 28.1°C as measured by Dynamic Mechanical Analysis using a Rheometrics Solids Analyzer (RSAII). The spectral strength of the ink was determined using a spectrophotographic procedure based on the measurement of the colorant in solution by dissolving the solid ink in butanol and measuring the absorbance using a Perkin Elmer Lambda 2S UV/VIS spectrophotometer. The spectral strength of the ink was measured as about 1006 milliliters · Absorbance Units per gram at λₘₐₓ.
¹Kemamide S-180 - Stearyl Stearamide available from Witco Chemical Company of Memphis, Tennessee.
²KE-100 - Glycerol ester of hydrogenated abietic (rosin) acid available from Arakawa Chemical Industries, Ltd. of Osaka, Japan.
³Naugard 445 - antioxidant available from Uniroyal Chemical Company of Oxford, Connecticut.

### EXAMPLE 9

### Cyan Ink Made From Amide Wax, Tackifier Resin and Colored Urethane/Urea Resin

About 250 grams of Kemamide S-180 stearyl stearamide¹, about 125 grams of a rosin ester tackfier available commercially as Arakawa KE-100², about 125 grams of the colored resin reaction product of Example 4, and about 1.0 grams of Uniroyal Naugard 445 antioxidant³ were combined in a stainless steel beaker. The materials were melted together at a temperature of about 140°C in an oven, then blended by stirring in a temperature controlled mantle at about 115°C for about 1/2 hour. After stirring for about 1/2 hour, the cyan ink was filtered through a heated Mott apparatus (available from Mott Metallurgical) using #3 Whatman filter paper and a pressure of about 103 kPa (15 psi). The filtered phase change ink was poured into molds and allowed to solidify to form ink sticks. This final ink product was characterized by the following physical properties: viscosity of about 12. mPa·s (cPs) as measured by a Ferranti-Shirley cone-plate viscometer at about 140°C, a melting point of about 89°C as measured by differential scanning calorimetry using a DuPont 2100 calorimeter, and a T_{g} of about 34 °C as measured by Dynamic Mechanical Analysis using a Rheometrics Solids Analyzer (RSAII). The spectral strength of the ink was determined using a spectrophotographic procedure based on the measurement of the colorant in solution by dissolving the solid ink in butanol and measuring the absorbance using a Perkin Elmer Lambda 2S UV/VIS spectrophotometer. The spectral strength of the ink was measured as about 1046 milliliters · Absorbance Units per gram at λₘₐₓ.
¹Kemamide S-180 - Stearyl Stearamide available from Witco Chemical Company of Memphis, Tennessee.
²KE-100 - Glycerol ester of bydrogenated abietic (rosin) acid available from Arakawa Chemical Industries, Ltd. of Osaka, Japan.
³Naugard 445 - antioxidant available from Uniroyal Chemical Company of Oxford, Connecticut.

### EXAMPLE 10

### Yellow Ink Made From Amide Wax, Tetra-amide Resin and Colored Urea Resin

In a stainless steel beaker were combined about 250 grams of Witco S-180 stearyl stearamide¹, about 125 grams of Union Camp Unirez 2970 tetra-amide resin², about 125 grams of the reaction product colored resin of Example 5, and about 1.6 grams of Uniroyal Naugard 445 antioxidant³. The materials were melted together at a temperature of about 140°C in an oven, then blended by stirring in a temperature controlled mantle at about 115°C for about 1/2 hour. After stirring, the yellow ink was filtered through a heated Mott apparatus (available from Mott Metallurgical) using #3 Whatman filter paper and a pressure of about 103 KPa (15 psi). The filtered phase change ink was poured into molds and allowed to solidify to form ink sticks. This final yellow ink product was characterized by the following physical properties: viscosity of about 13.9 mPa·s (cPs) as measured by a Ferranti-Shirley cone-plate viscometer at about 140°C, a melting point of about 91.5°C as measured by differential scanning calorimetry using a DuPont 2100 calorimeter, and a T_{g} of about 49°C as measured by Dynamic Mechanical Analysis using a Rheometrics Solids Analyzer (RSAII). The spectral strength of the ink was determined using a spectrophotographic procedure based on the measurement of the colorant in solution by dissolving the solid ink in butanol and measuring the absorbance using a Perkin Elmer Lambda 2S UV/VIS spectrophotometer. The spectral strength of the ink was measured as about 590 milliliters · Absorbance Units per gram at λₘₐₓ.
¹Kemamide S-180 - Stearyl stearamide available from Witco Chemical Company of Memphis, Tennessee.
²Unirez 2970 - Tetra-amide available from Union Camp Corporation of Wayne, New Jersey.
³Naugard 445 - antioxidant available from Uniroyal Chemical Company of Oxford, Connecticut.

### EXAMPLE 11

### Cyan Ink Made From Amide Wax, Mixed Urethane/Urea Resin and Cyan Colored Urethane Resin

In a stainless steel beaker were combined about 250 grams of the cyan colored resin from Example 2 about 250 grams of the reaction product urethane/urea mixture material from Example 2, of co-pending European Patent Application No. (not yet allotted), our file APEP97526, filed concurrently herewith and in the name of the Applicant of the present invention, about 540 grams of Witco S-180 stearyl stearamide¹ and about 2.0 grams of Uniroyal Naugard 445 antioxidant². The materials were melted together at a temperature of 140°C in an oven, then blended by stirring in a temperature controlled mantle at about 115°C for about 1/2 hour. To this mixture was added about 5 grams of Solvent Blue 44. After stirring for about 1/2 hour, the cyan ink was filtered through a heated Mott apparatus (available from Mott Metallurgical) using #3 Whatman filter paper and a pressure of about 103 KPa (15 psi). The filtered phase change ink was poured into molds and allowed to solidify to form ink sticks. This final ink product was characterized by the following physical properties: viscosity of about 13.0 mPa·s (cPs) as measured by a Ferranti-Shirley cone-plate viscometer at about 140°C, a melting point of about 89°C as measured by differential scanning calorimetry using a DuPont 2100 calorimeter, and a T_{g} of about 27.5°C as measured by Dynamic Mechanical Analysis using a Rheometrics Solids Analyzer (RSAII). The spectral strength of the ink was determined using a spectrophotographic procedure based on the measurement of the colorant in solution by dissolving the solid ink in butanol and measuring the absorbance using a Perkin Elmer Lambda 2S UV/VIS spectrophotometer. The spectral strength of the ink was measured as about 1069 milliliters · Absorbance Units per gram at λₘₐₓ.
¹Kemamide S-180 - Stearyl stearamide available from Witco Chemical Company of Memphis, Tennessee.
²Naugard 445 - antioxidant available from Uniroyal Chemical Company of Oxford, Connecticut.

### EXAMPLE 12

### Yellow Ink Made From Amide Wax, Mixed Urethane/Urea Resin and Yellow Colored Urethane Resin

In a stainless steel beaker were combined about 98.6 grams of the colored resin from Example 1 about 80.7 grams of the material from Example 2, of co-pending European Patent Application No (not yet allotted), our file APEP97526, filed concurrently herewith and in the name of the Applicant of the present invention, about 179 grams of Witco S-180 stearyl stearamide¹ and about 0.7 grams of Uniroyal Naugard 445 antioxidant². The materials were melted together at a temperature of about 140°C in an oven, then blended by stirring in a temperature controlled mantle at about 115°C for about 1/2 hour. The yellow ink was then filtered through a heated Mott apparatus (available from Mott Metallurgical) using #3 Whatman filter paper and a pressure of about 103 KPa (15 psi). The filtered phase change ink was poured into molds and allowed to solidify to form ink sticks. This final ink product was characterized by the following physical properties: viscosity of about 13.6 mPa·s (cPs) as measured by a Ferranti-Shirley cone-plate viscometer at about 140°C, a melting point of about 90°C as measured by differential scanning calorimetry using a DuPont 2100 calorimeter, and a T_{g} of about 20°C as measured by Dynamic Mechanical Analysis using a Rheometrics Solids Analyzer (RSAII). The spectral strength of the ink was determined using a spectrophotographic procedure based on the measurement of the colorant in solution by dissolving the solid ink in butanol and measuring the absorbance using a Perkin Elmer Lambda 2S UV/VIS spectrophotometer. The spectral strength of the ink was measured as about 1497 milliliters · Absorbance Units per gram at λₘₐₓ.
¹Kemamide S-180 - Stearyl stearamide available from Witco Chemical Company of Memphis, Tennessee.
²Naugard 445 - antioxidant available from Uniroyal Chemical Company of Oxford, Connecticut.

### EXAMPLE 13

### Black Ink Made From Amide Wax, Mixed Urethane/Urea Resin and Black Colored Urethane Resin

In a stainless steel beaker were combined about 301 grams of the colored resin from Example 3 about 374 grams of the reaction product urethane/urea mixture material from Example 2, of co-pending European Patent Application No (not yet allotted), our file APEP97526, filed concurrently herewith and in the name of the Applicant of the present invention, about 802 grams of Witco S-180 stearyl stearamide¹ and about 3.0 grams of Uniroyal Naugard 445 antioxidant². The materials were melted together at a temperature of about 140°C in an oven, then blended by stirring in a temperature controlled mantle at about 115°C for about 1/2 hour. The black ink was then filtered through a heated Mott apparatus (available from Mott Metallurgical) using #3 Whatman filter paper and a pressure of about 103 kPa (15 psi). The filtered phase change ink was poured into molds and allowed to solidify to form ink sticks. This final ink product was characterized by the following physical properties: viscosity of about 13.3 mPa·s (cPs) as measured by a Ferranti-Shirley cone-plate viscometer at about 140°C, a melting point of about 89°C as measured by differential scanning calorimetry using a DuPont 2100 calorimeter, and a T_{g} of about 16°C as measured by Dynamic Mechanical Analysis using a Rheometrics Solids Analyzer (RSAII). The spectral strength of the ink was determined using a spectrophotographic procedure based on the measurement of the colorant in solution by dissolving the solid ink in butanol and measuring the absorbance using a Perkin Elmer Lambda 2S UV/VIS spectrophotometer. The spectral strength of the ink was measured as about 869 milliliters · Absorbance Units per gram at λₘₐₓ.
¹Kemamide S-180 - Stearyl stearamide available from Witco Chemical Company of Memphis, Tennessee.
²Naugard 445 - antioxidant available from Uniroyal Chemical Company of Oxford, Connecticut.

### PRINT TESTING

The inks in examples 6-10 were tested in a commercially available Tektronix Phaser 340 printer, which uses an offset transfer printing system employing the printing process described in greater detail in U.S. Patent No. 5,389,958. All of the above inks were found to completely transfer and to give images of good color, print quality and durability either as primary colors or when used in combination with each other or the standard Phaser 340 inks.

The inks in Examples 6-10 were tested in a commercially available Tektronix Phaser 300 printer, which uses a direct printing system employing the printing process described in greater detail in U.S. Patent No. 5,195,430. All of the above inks were found to give images of good color, print quality and durability either as primary colors or when used in combination with each other or the standard Phaser 300 inks.

## Claims

1. An isocyanate-derived colored monomeric, oligomeric or nonpolymeric resin comprising the reaction product of:
(a) an isocyanate; and
(b) at least one chromogen-containing nucleophile.

2. An isocyanate-derived colored monomeric, oligomeric or nonpolymeric resin comprising the reaction product of:
(a) an isocyanate;
(b) a nucleophile selected from the group consisting of at least one alcohol, at least one amine, and mixtures thereof; and
(c) at least one chromogen-containing nucleophile.

3. A resin as claimed in Claim 1 or Claim 2 wherein the isocyanate is a monoisocyanate, a diisocyanate, a triisocyanate, a copolymer of a diisocyanate or a copolymer of a triisocyanate.

4. A resin as claimed in Claim 3 wherein the isocyanate is isophorone diisocyanate.

5. A resin as claimed in any preceding claim wherein the chromogen-containing nucleophile is a dye containing at least one alcohol functional group.

6. A resin as claimed in any preceding claim wherein the chromogen-containing nucleophile is a polymeric dye.

7. A resin as claimed in any one of Claims 1 to 5 wherein the chromogen-containing nucleophile is a compound which has at least one alcohol functional group which is terminal to a alkylene oxide or styrene oxide polymeric chain.

8. A resin as claimed in any one of Claims 1 to 5 wherein the chromogen-containing nucleophile is a compound which has at least one functional group which is terminal to a butylene oxide, polyethylene oxide, polypropylene oxide or polyethylene/polypropylene oxide polymeric chain.

9. A resin as claimed in any one of Claims 1 to 5 wherein the reaction product is one produced by reaction of an isocyanate and a nucleophilic component which is a monohydric alcohol as hereinafter specified, namely an aliphatic alcohol, an aromatic alcohol or a derivative thereof, an aliphatic/aromatic alcohol, a fused ring alcohol or a multifunctional alcohol, said nucleophilic component comprising a chromogen-containing nucleophile or such a nucleophile together with another nucleophile.

10. A resin as claimed in Claim 9 wherein the monohydric alcohol is hydroabietyl alcohol, octylphenol ethoxylate, octadecyl alcohol, octadecanol or a mixture of two or more thereof.

11. A resin as claimed in any one of Claims 1 to 4 wherein the reaction product is one produced by reaction of an isocyanate and a nucleophilic component which is a monoamine as hereinafter specified, namely an aliphatic amine, an aromatic amine, an aliphatic/aromatic amine, a fused ring system amine, a multifunctional amine, a hydroxyl/amino containing compound, an amide or a mixture of two or more thereof, said nucleophilic component comprising a chromogen-containing nucleophile or such a nucleophile together with another nucleophile.

12. A resin as claimed in Claim 11 wherein the monoamine is octadecyl amine.

13. A resin as claimed in any one of Claims 1 to 5 wherein the reaction product is one produced by reaction of an isocyanate and a nucleophilic component which comprises a monohydric alcohol and is as defined in Claim 9 or Claim 10 and/or comprises a monoamine and is as defined in Claim 11 or Claim 12.

14. A resin as claimed in any preceding claim wherein the reaction product is one produced by a process comprising mixing and heating the nucleophile reactant(s) and the isocyanate in an inert atmosphere.

15. A resin as claimed in Claim 14 wherein the inert atmosphere is a nitrogen atmosphere.

16. A resin as claimed in any preceding claim wherein the reaction product is the product of a process which comprises mixing and heating at least one alcohol and the isocyanate in the presence of a catalyst.

17. A resin as claimed in any preceding claim wherein the reaction product is the product of a reaction between 65 % and 100% of an equivalent of nucleophilic reactant per equivalent of the isocyanate.

18. A resin as claimed in Claim 17 wherein the nucleophilic reactant is reacted in an amount of from 75% to 90% of an equivalent per equivalent of the isocyanate.

19. A resin as claimed in any preceding claim which is a colorant, a colored diurea resin, or a colored urethane/urea resin.

20. A phase change ink composition comprising in combination:-
(a) a mono-amide;
(b) a tackifier; and
(c) a colorant comprising at least one colored isocyanate-derived resin.

21. A composition as claimed in Claim 20 and including an anti-oxidant and/or a tetraamide.

22. A composition as claimed in Claim 20 or Claim 21 wherein the colored isocyanate-derived resin is the reaction product of:-
(a) an isocyanate;
(b) a nucelophile selected from the group consisting of at least one alcohol, at least one amine, and mixtures thereof; and
(c) at least one chromogen-containing nucleophile.

23. A composition as claimed in any one of Claim 20 to 22 wherein the amide is present in an amount of from 1 to 20 parts by weight, the tackifier is present in an amount of from 15% to 60% by weight of the amide and the resin is present in amount of from 0.5 parts to 10 parts by weight provided that the amount of resin is from 25% to 50% by weight of the amount of the amide.

24. A composition as claimed in Claim 23 wherein the amount of amide is from 2 to 15 parts by weight, the amount of tackifier is from 25% to 50% by weight of the amide and the amount of the resin is from 1 to 6 parts by weight provided that the amount of resin is from 40% to 50% by weight of the amount of the amide.

25. A method for producing a layer of phase change colored ink on a surface of a substrate, which method comprises:-
(1) forming a phase change ink composition in the solid phase comprising an admixture of (a) a phase change carrier composition and (b) a compatible phase change colorant comprising at least one colored isocyanate-derived resin formed by the reaction of an isocyanate precursor and at least one alcohol;
(2) transferring said solid phase, phase change color ink composition to a phase change ink application means;
(3) raising the operating temperature of said application means to a level whereby a liquid phase, phase change colored ink composition is formed;
(4) providing a substrate in proximity to said application means;
(5) applying a predetermined pattern of said liquid phase, phase change colored ink composition to at least surface of said substrate; and
(6) lowering the temperature of said applied ink composition to form a solid phase, phase change ink pattern on the substrate.

26. A method for producing a layer of phase change colored ink on a surface of a substrate, which method comprises:-
(1) employing in a printing apparatus a phase change ink composition in the solid phase comprising an admixture of (a) a phase change carrier composition and (b) a compatible phase change colorant comprising at least one colored isocyanate-derived resin formed by the reaction of an isocyanate precursor and at least one alcohol;
(2) applying the phase change ink composition in a desired pattern to an intermediate transfer surface; and
(3) tranferring the desired pattern of the phase change ink composition to the surface of the substrate.

27. A resin as claimed in Claim 2, wherein the nucleophile (b) is selected from the group consisting of at least one monofunctional alcohol, at least one monofunctional amine, and mixtures thereof.

## Patentansprüche

1. Von einem Isocyanat abgeleitetes, farbiges, monomeres, oligomeres oder nicht-polymeres Harz umfassend das Reaktionsprodukt
(a) eines Isocyanats und
(b) wenigstens eines chromogenhaltigen Nukleophils.

2. Von einem Isocyanat abgeleitetes, farbiges, monomeres oder nicht-polymeres Harz umfassend das Reaktionsprodukt
(a) eines Isocyanats;
(b) eines Nukleophils, das aus der aus wenigstens einem Alkohol, wenigstens einem Amin und Gemischen daraus bestehenden Gruppe ausgewählt ist, und
(c) wenigstens eines chromogenhaltigen Nukleophils.

3. Harz wie in Anspruch 1 oder Anspruch 2 beansprucht, wobei das Isocyanat ein Monoisocyanat, ein Diisocyanat, ein Triisocyanat, ein Copolymer eines Diisocyanats oder ein Copolymer eines Triisocyanats ist.

4. Harz wie in Anspruch 3 beansprucht, wobei das Isocyanat Isophorondiisocyanat ist.

5. Harz wie in einem vorangehenden Anspruch beansprucht, wobei das chromogenhaltige Nukleophil ein Farbstoff ist, der wenigstens eine funktionelle Alkoholgruppe enthält.

6. Harz wie in einem vorangehenden Anspruch beansprucht, wobei das chromogenhaltige Nukleophil ein polymerer Farbstoff ist.

7. Harz wie in einem der Ansprüche 1 bis 5 beansprucht, wobei das chromogenhaltige Nukleophil eine Verbindung ist, die wenigstens eine funktionelle Alkoholgruppe aufweist, die zu einer Alkylenoxid- oder Styroloxid-Polymerkette endständig ist.

8. Harz wie in einem der Ansprüche 1 bis 5 beansprucht, wobei das chromogenhaltige Nukleophil eine Verbindung ist, die wenigstens eine funktionelle Gruppe aufweist, die zu einer Butylenoxid-, Polyethylenoxid-, Polypropylenoxid- oder Polyethylen/Polypropylenoxid-Polymerkette endständig ist.

9. Harz wie in einem der Ansprüche 1 bis 5 beansprucht, wobei das Reaktionsprodukt eines ist, das durch Reaktion eines Isocyanats und einer nukleophilen Komponente, die ein hierin nachstehend aufgeführter einwertiger Alkohol, nämlich ein aliphatischer Alkohol, ein aromatischer Alkohol oder ein Derivat davon, ein aliphatisch/aromatischer Alkohol, ein Alkohol eines kondensierten Rings oder ein multifunktioneller Alkohol ist, hergestellt wurde, wobei die nukleophile Komponente ein chromogenhaltiges Nukleophil oder ein derartiges Nukleophil zusammen mit einem weiteren Nukleophil umfaßt.

10. Harz wie in Anspruch 9 beansprucht, wobei der einwertige Alkohol Hydroabietylalkohol, Octylphenolethoxylat, Octadecylalkohol, Octadecanol oder ein Gemisch zweier oder mehrerer davon ist.

11. Harz wie in einem der Ansprüche 1 bis 4 beansprucht, wobei das Reaktionsprodukt eines ist, das durch Reaktion eines Isocyanats und einer nukleophilen Komponente, die ein hierin nachstehend aufgeführtes Monoamin, nämlich ein aliphatisches Amin, ein aromatisches Amin, ein aliphatisch/aromatisches Amin, ein Amin eines kondensierten Ringssystems, ein multifunktionelles Amin, eine hydroxy/aminohaltige Verbindung, ein Amid oder ein Gemisch zweier oder mehrerer davon ist, hergestellt wurde, wobei die nukleophile Komponente ein chromogenhaltiges Nukleophil oder ein derartiges Nukleophil zusammen mit einem weiteren Nukleophil umfaßt.

12. Harz wie in Anspruch 11 beansprucht, wobei das Monoamin Octadecylamin ist.

13. Harz wie in einem der Ansprüche 1 bis 5 beansprucht, wobei das Reaktionsprodukt eines ist, das durch Reaktion eines Isocyanats und einer nukleophilen Komponente hergestellt wurde, die einen einwertigen Alkohol umfaßt und wie in Anspruch 9 oder Anspruch 10 definiert ist, und/oder ein Monoamin umfaßt und wie in Anspruch 11 oder Anspruch 12 definiert ist.

14. Harz wie in einem vorangehenden Anspruch beansprucht, wobei das Reaktionsprodukt eines ist, das durch ein Verfahren hergestellt wurde, das das Mischen und Erhitzen des (der) nukleophilen Reaktanten und des Isocyanats in einer inerten Atmosphäre umfaßt.

15. Harz wie in Anspruch 14 beansprucht, wobei die inerte Atmosphäre eine Stickstoffatmosphäre ist.

16. Harz wie in einem vorangehenden Anspruch beansprucht, wobei das Reaktionsprodukt das Produkt eines Verfahrens ist, das das Mischen und Erhitzen wenigstens eines Alkohols und des Isocyanats in Gegenwart eines Katalysators umfaßt.

17. Harz wie in einem vorangehenden Anspruch beansprucht, wobei das Reaktionsprodukt das Produkt einer Reaktion zwischen 65% und 100% eines Äquivalents eines nukleophilen Reaktanten je Äquivalent des Isocyanats ist.

18. Harz wie in Anspruch 17 beansprucht, wobei der nukleophile Reaktant in einer Menge von 75% bis 90% eines Äquivalents je Äquivalent des Isocyanats umgesetzt wird.

19. Harz wie in einem vorangehenden Anspruch beansprucht, das ein Farbmittel, ein gefärbtes Diharnstoffharz oder ein gefärbtes Urethan/Harnstoffharz ist.

20. Phasenwechsel-Tintenzusammensetzung umfassend in Kombination
(a) ein Monoamid,
(b) einen Klebrigmacher und
(c) ein Farbmittel, das wenigstens ein farbiges, von einem Isocyanat abgeleitetes Harz umfaßt.

21. Zusammensetzung wie in Anspruch 20 beansprucht, die ein Antioxidans und/oder ein Tetraamid einschließt.

22. Zusammensetzung wie in Anspruch 20 oder Anspruch 21 beansprucht, wobei das gefärbte, von einem Isocyanat abgeleitete Harz das Reaktionsprodukt
(a) eines Isocyanats,
(b) eines Nukleophils, das aus der aus wenigstens einem Alkohol, wenigstens einem Amin und Gemischen daraus bestehenden Gruppe ausgewählt ist, und
(c) wenigstens eines chromogenhaltigen Nukleophils ist.

23. Zusammensetzung wie in einem der Ansprüche 20 bis 22 beansprucht, wobei das Amid in einer Menge von 1 bis 20 Gewichtsteilen vorliegt, der Klebrigmacher in einer Menge von 15 Gew.-% bis 60 Gew.-% des Amids vorliegt und das Harz in einer Menge von 0,5 bis 10 Gewichtsteilen vorliegt, vorausgesetzt, daß die Harzmenge von 25 Gew.-% bis 50 Gew.-% der Amidmenge beträgt.

24. Zusammensetzung wie in Anspruch 23 beansprucht, wobei die Amidmenge von 2 bis 15 Gewichtsteile beträgt, die Menge des Klebrigmachers von 25 Gew.-% bis 50 Gew.-% des Amids beträgt und die Harzmenge von 1 bis 6 Gewichtsteile beträgt, vorausgesetzt, daß die Harzmenge von 40 Gew.-% bis 50 Gew.-% der Amidmenge beträgt.

25. Verfahren zum Herstellen einer Schicht aus einer gefärbten Phasenwechseltinte auf einer Substratoberfläche, wobei das Verfahren das
(1) Bilden einer Phasenwechsel-Tintenzusammensetzung in fester Phase, die ein Gemisch aus (a) einer Phasenwechsel-Trägerzusammensetzung und (b) einem verträglichen Phasenwechsel-Farbmittel umfaßt, das wenigstens ein farbiges, von einem Isocyanat abgeleitetes Harz umfaßt, das durch die Reaktion einer Isocyanatvorstufe und wenigstens eines Alkohols gebildet wurde,
(2) Überführen der Phasenwechsel-Farbtintenzusammensetzung in fester Phase in ein Phasenwechsel-Tintenauftragsmittel,
(3) Erhöhen der Betriebstemperatur des Auftragsmittels auf einen Wert, durch den eine farbige Phasenwechsel-Tintenzusammensetzung in flüssiger Phase gebildet wird,
(4) Bereitstellen eines Substrats in der Nähe des Auftragsmittels,
(5) Auftragen eines vorbestimmten Musters aus der farbigen Phasenwechsel-Tintenzusammensetzung in flüssiger Phase auf wenigstens eine Oberfläche des Substrats und
(6) Erniedrigen der Temperatur der aufgetragenen Tintenzusammensetzung unter Bilden eines Phasenwechsel-Tintenmusters in fester Phase auf dem Substrat umfaßt.

26. Verfahren zum Herstellen einer Schicht aus einer farbigen Phasenwechseltinte auf einer Substratoberfläche, wobei das Verfahren das
(1) Einsetzen einer Phasenwechsel-Tintenzusammensetzung in fester Phase in einem Druckgerät, die ein Gemisch aus (a) einer Phasenwechsel-Trägerzusammensetzung und (b) einem verträglichen Phasenwechsel-Farbmittel umfaßt, das wenigstens ein farbiges, von einem Isocyanat abgeleitetes Harz umfaßt, das durch die Reaktion einer Isocyanatvorstufe und wenigstens eines Alkohols gebildet wurde,
(2) Aufbringen der Phasenwechsel-Tintenzusammensetzung in einem gewünschten Muster auf eine Zwischenübertragungsoberfläche und
(3) Überführen des gewünschten Musters aus der Phasenwechsel-Tintenzusammensetzung auf die Substratoberfläche umfaßt.

27. Harz wie in Anspruch 2 beansprucht, wobei das Nukleophil (b) aus der aus wenigstens einem monofunktionellen Alkohol, wenigstens einem monofunktionellen Amin und Gemischen daraus bestehenden Gruppe ausgewählt ist.

## Revendications

1. Résine monomérique, oligomérique ou non-polymérique colorée dérivée d'un isocyanate comprenant le produit de réaction de :
(a) un isocyanate; et
(b) au moins un nucléophile contenant un chromogène.

2. Résine monomérique, oligomérique ou non-polymérique colorée dérivée d'un isocyanate comprenant le produit de réaction de :
(a) un isocyanate;
(b) un nucléophile choisi dans le groupe constitué par au moins un alcool, au moins une amine, et des mélanges de ceux-ci; et
(c) au moins un nucléophile contenant un chromogène.

3. Résine telle que revendiquée dans la revendication 1 ou la revendication 2 dans laquelle l'isocyanate est un monoisocyanate, un diisocyanate, un triisocyanate, un copolymère d'un diisocyanate ou un copolymère d'un triisocyanate.

4. Résine telle que revendiquée dans la revendication 3 dans laquelle l'isocyanate est un diisocyanate d'isophorone.

5. Résine telle que revendiquée dans n'importe quelle revendication précédente dans laquelle le nucléophile contenant un chromogène est une matière colorante contenant au moins un groupe fonctionnel alcool.

6. Résine telle que revendiquée dans n'importe quelle revendication précédente dans laquelle le nucléophile contenant un chromogène est une matière colorante polymérique.

7. Résine telle que revendiquée dans l'une quelconque des revendications 1 à 5 dans laquelle le nucléophile contenant un chromogène est un composé qui a au moins un groupe fonctionnel alcool qui est terminal à une chaîne polymérique d'oxyde d'alkylène ou d'oxyde de styrène.

8. Résine telle que revendiquée dans l'une quelconque des revendications 1 à 5 dans laquelle le nucléophile contenant un chromogène est un composé qui a au moins un groupe fonctionnel qui est terminal à une chaîne polymérique d'oxyde de butylène, d'oxyde de polyéthylène, d'oxyde de polypropylène ou d'oxyde de polyéthylène/polypropylène.

9. Résine telle que revendiquée dans l'une quelconque des revendications 1 à 5 dans laquelle le produit de réaction est un produit préparé par réaction d'un isocyanate et d'un composant nucléophile qui est un monoalcool tel que spécifié ci-après, à savoir un alcool aliphatique, un alcool aromatique ou un dérivé de celui-ci, un alcool aliphatique/aromatique, un alcool à cycles condenses ou un alcool multifonctionnel, ledit composant nucléophile comprenant un nucléophile contenant un chromogène ou un tel nucléophile avec en même temps un autre nucléophile.

10. Résine telle que revendiquée dans la revendication 9 dans laquelle le monoalcool est un alcool hydroabiétylique, un éthoxylate d'octylphénol, un alcool octadécylique, un octadécanol ou un mélange de deux ou plusieurs de ceux-ci.

11. Résine telle que revendiquée dans l'une quelconque des revendications 1 à 4 dans laquelle le produit de réaction est un produit préparé par réaction d'un isocyanate et d'un composant nucléophile qui est une monoamine telle que spécifiée ci-après, à savoir une amine aliphatique, une amine aromatique, une amine aliphatique/aromatique, une amine à système cyclique condensé, une amine multifonctionnelle, un composé contenant hydroxyle/amino, un amide ou un mélange de deux ou plusieurs de ceux-ci, ledit composant nucléophile comprenant un nucléophile contenant un chromogène ou un tel nucléophile avec en même temps un autre nucléophile.

12. Résine telle que revendiquée dans la revendication 11 dans laquelle la monoamine est une octadécylamine.

13. Résine telle que revendiquée dans l'une quelconque des revendications 1 à 5 dans laquelle le produit de réaction est un produit préparé par réaction d'un isocyanate et d'un composant nucléophile qui comprend un monoalcool et est tel que défini dans la revendication 9 ou la revendication 10 et/ou comprend une monoamine et est telle que définie dans la revendication 11 ou la revendication 12.

14. Résine telle que revendiquée dans n'importe quelle revendication précédente dans laquelle le produit de réaction est un produit préparé par un procédé comprenant le mélange et le chauffage du/des réactif(s) nucléophile(s) et de l'isocyanate dans une atmosphère inerte.

15. Résine telle que revendiquée dans la revendication 14 dans laquelle l'atmosphère inerte est une atmosphère d'azote.

16. Résine telle que revendiquée dans n'importe quelle revendication précédente dans laquelle le produit de réaction est le produit d'un procédé qui comprend le mélange et le chauffage d'au moins un alcool et de l'isocyanate en présence d'un catalyseur.

17. Résine telle que revendiquée dans n'importe quelle revendication précédente dans laquelle le produit de réaction est le produit d'une réaction entre 65 % et 100 % d'un équivalent d'un réactif nucléophile par équivalent de l'isocyanate.

18. Résine telle que revendiquée dans la revendication 17 dans laquelle le réactif nucléophile est mis à réagir dans une quantité de 75 % à 90 % d'un équivalent par équivalent de l'isocyanate.

19. Résine telle que revendiquée dans n'importe quelle revendication précédente qui est un colorant, une résine de diurée colorée, ou une résine d'uréthane/urée colorée.

20. Composition d'encre à changement de phase comprenant en combinaison :
(a) un mono-amide;
(b) un agent rendant adhésif; et
(c) un colorant comprenant au moins une résine dérivée d'un isocyanate colorée.

21. Composition telle que revendiquée dans la revendication 20 et incluant un anti-oxydant et/ou un tétraamide.

22. Composition telle que revendiquée dans la revendication 20 ou la revendication 21 dans laquelle la résine dérivée d'un isocyanate colorée est le produit de réaction de :
(a) un isocyanate;
(b) un nucléophile choisi dans le groupe constitué par au moins un alcool, au moins une amine, et des mélanges de ceux-ci; et
(c) au moins un nucléophile contenant un chromogène.

23. Composition telle que revendiquée dans n'importe quelle revendication 20 à 22 dans laquelle l'amide est présent dans une quantité de 1 à 20 parties en poids, l'agent rendant adhésif est présent dans une quantité de 15 % to 60 % en poids de l'amide et la résine est présente dans une quantité de 0,5 à 10 parties en poids à condition que la quantité de résine soit de 25 % à 50 % en poids de la quantité de l'amide.

24. Composition telle que revendiquée dans la revendication 23 dans laquelle la quantité d'amide est de 2 à 15 parties en poids, la quantité d'agent rendant adhésif est de 25 % à 50 % en poids de l'amide et la quantité de la résine est de 1 à 6 parties en poids à condition que la quantité de résine soit de 40 % à 50 % en poids de la quantité de l'amide.

25. Procédé pour produire une couche d'encre colorée à changement de phase sur une surface d'un substrat, lequel procédé comprend :
(1) la formation d'une composition d'encre à changement de phase dans la phase solide comprenant un mélange de (a) une composition de support à changement de phase et (b) un colorant à changement de phase compatible comprenant au moins une résine dérivée d'un isocyanate colorée formée par la réaction d'un précurseur d'isocyanate et d'au moins un alcool;
(2) le transfert de cette composition d'encre couleur à changement de phase, en phase solide, vers un moyen d'application d'une encre à changement de phase;
(3) l'augmentation de la température de travail dudit moyen d'application à un niveau grâce auquel une composition d'encre colorée à changement de phase, en phase liquide soit formée;
(4) la fourniture d'un substrat à proximité dudit moyen d'application;
(5) l'application d'un motif prédéterminé de ladite composition d'encre colorée à changement de phase, en phase liquide, à au moins une surface dudit substrat; et
(6) la diminution de la température de ladite composition d'encre appliquée pour former un motif d'encre à changement de phase, en phase solide, sur le substrat.

26. Procédé pour produire une couche d'encre colorée à changement de phase sur une surface d'un substrat, lequel procédé comprend :
(1) l'utilisation dans un appareil d'impression d'une composition d'encre à changement de phase dans la phase solide comprenant un mélange de (a) une composition de support à changement de phase et (b) un colorant à changement de phase compatible comprenant au moins une résine dérivée d'un isocyanate colorée formée par la réaction d'un précurseur d'isocyanate et de au moins un alcool;
(2) l'application de la composition d'encre à changement de phase dans un motif désiré à une surface de transfert intermédiaire; et
(3) le transfert du motif désiré de la composition d'encre à changement de phase à la surface du substrat.

27. Résine telle que revendiquée dans la revendication 2, dans laquelle le nucléophile (b) est choisi dans le groupe constitué par au moins un alcool monofonctionnel, au moins une amine monofonctionnelle, et des mélanges de ceux-ci.
